# EUROPEAN PATENT SPECIFICATION

(11) **EP 2 828 461 B1**
(45) Date of publication and mention of the grant of the patent: **09.11.2016**
(21) Application number: 13716421.6
(22) Date of filing: 22.02.2013
(51) Int. Cl.: E06B 9/17

(54) **ROLLER SHUTTER BOX**
ROLLADENKASTEN
CAISSON DE VOLET ROULANT

(30) Priority: 23.03.2012 IT PD20120090
(43) Date of publication of application: 28.01.2015
(73) Proprietor: Dallan S.p.A., 31033 Castelfranco Veneto (Treviso) (IT)
(72) Inventor: DALLAN, Sergio, I-31033 Castelfranco Veneto (Treviso) (IT)
(74) Representative: Zanettin, Gianluigi
(86) International application number: PCT/IB2013/051461
(87) International publication number: WO 2013/140277

(56) References cited:
- EP-A1- 0 309 370
- EP-A2- 0 137 133
- DE-C1- 4 411 997
- FR-A1- 2 843 608

## Description

### Sphere of application

The present invention relates to a roller shutter box.

### State of the art

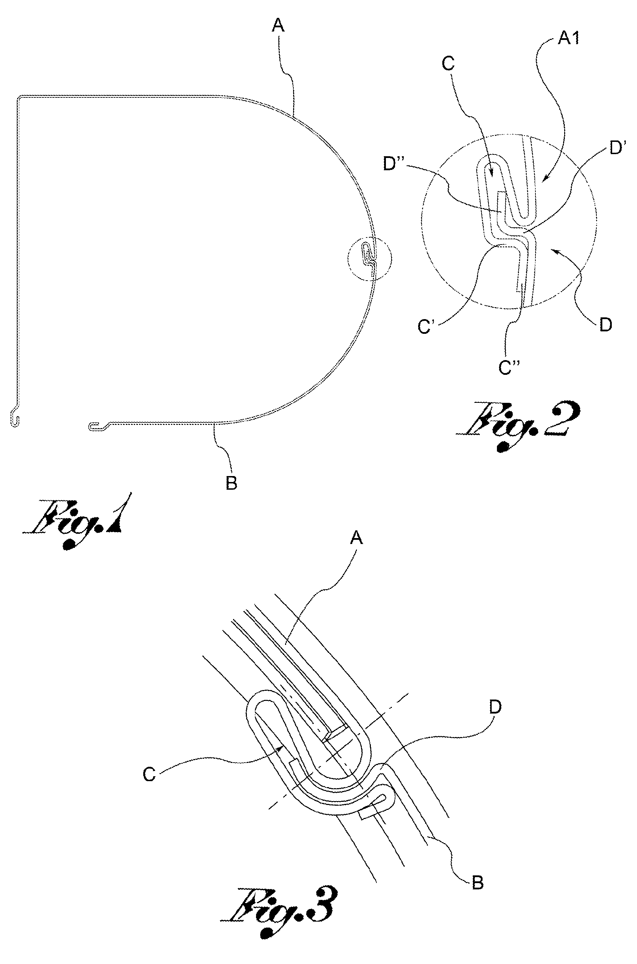

A roller shutter box of the traditional type (as shown for example in Figure 1) comprises an upper longitudinal profile A, destined to be attached to the wall, and a lower longitudinal profile B, detachably connected to the upper profile to permit opening of the shutter box. The shutter box is closed at the two longitudinal ends by end elements, associated to the two profiles to support the pin of the shutter. The lower profile B is connected to the upper profile by means of an extremal coupling portion D which is inserted in a catching relation in a housing seat C made at an extremal portion A1 of the upper profile A. The coupling must be safe and stable, to prevent accidental uncoupling of the lower profile.

A first need widely felt in the sector referred to is the ease of coupling the lower profile to the upper profile. The coupling should be smooth, without requiring effort by the user.

A second widely felt need is rather of an aesthetic nature. The connection area of the two profiles should be as invisible as possible In other words, when coupling has been performed, on the outside of the box the two profiles should be as close together as possible.

Generally speaking, ease of coupling is achieved by increasing the dimensions of the housing seat in relation to the dimensions and shape of the coupling portion D. This solution is adopted, for example, in the roller shutter box shown in Figures 1 and 2, in which the entrance aperture to the seat and inner compartment defined by said seat are much wider than the thickness and shape of the coupling portion D. More specifically, the housing seat C is obtained by bending the portion of free end A1 of the upper profile into a Z shape, with two substantially parallel tracts, connected by an intermediate inclined tract. The free portion A1 ends with an inverted L-shaped area, bent towards the Z-shaped area, so as to define the entrance slot to the seat C with a first tract C' (inside the seat) and with a second tract C" ( external to the seat) an abutment area for the lower profile B. The first tract C' is orthogonal to the two parallel tracts of the Z-shaped area. The coupling portion D is bent into an L and thus has two tracts orthogonal to each other, one of abutment D' and one of coupling D". Once inserted inside the seat, the coupling portion D abuts on the inverted L portion with the abutment portion D' and engages the Z-shaped area with a coupling tract D". This solution is satisfactory both in terms of stability and ease of coupling. It is however less satisfactory from an aesthetic point of view, given that it does not permit the two profiles to be drawn very close together at the joint area.

An alternative solution is described in the European patent application EP309370A1. According to this solution the coupling portion has two bumps of opposed cavity.

An alternative solution is described in the European patent EP23749821A1, from which Figure 3 appended has been taken. The coupling portion D has the free end bent into a circular arc. The housing seat C (made by shaping the extremal portion A1 of the upper profile) has a width only slightly greater than the thickness of the coupling portion D and has a first circular arc shaped entrance tract with concavity facing upwards, counter-shaped to the coupling portion D. The guide effect exerted by the housing seat on the coupling portion D makes the lower profile adhere very closely to the upper profile. All this, combined with the fact that the access aperture to the seat is of smaller dimensions than the traditional solution described above, leads to a significant improvement from an aesthetic point of view. This solution requires however very strict tolerances of the seat profiling and of the coupling portion to prevent problems arising during coupling operations. Moreover, the shape of the housing seat requires - during coupling - the raising of the lower profile upwards. This limits the positioning of the connection area between the two profiles in relation to the top of the box often designed to be positioned next to the ceiling

### Presentation of the invention

The purpose of the present invention is therefore to eliminate the drawbacks of the prior art mentioned above, by making available a roller shutter box which permits easy coupling of the lower profile and which is at the same time satisfactory from an aesthetic point of view.

A further purpose of the present invention is to make available a roller shutter box which makes it possible to position the joining area of the two profiles as close as possible to the top of said box in the case of a semicircular shutter box.

A further purpose of the present invention is to make available a roller shutter box which is easy and economical to produce.

### Brief description of the drawings

The technical characteristics of the invention, according to the aforesaid purposes, will be clearly evident from the contents of the claims below and the advantages thereof will be evident from the detailed description given below with reference to the appended drawings showing one or more embodiments, purely by way of a non-limiting example, wherein:
- Figure 1 shows a cross-section view of a roller shutter box of the traditional type;
- Figure 2 shows a detail of the shutter box in Figure 1, relative to the coupling area of the lower and upper profile, indicated in the circle shown therein;
- Figure 3 shows a detail of the shutter box described in the patent application EP2374982A1, relative to the coupling area of the lower and upper profile;
- Figure 4 shows a cross-section view of a roller shutter box according to a first embodiment of the invention;
- Figure 5 shows a detail of the shutter box in Figure 4, relative to the coupling area of the lower and upper profile, indicated in the circle shown therein;
- Figure 6 shows a view in transversal cross-section respectively of a housing seat and of a coupling portion made in the end portions of the profiles of a roller shutter box according to a preferred embodiment of the invention 1;
- Figures 8 to 12 show in sequence the coupling steps of a lower profile to the upper profile of a roller shutter box according to a preferred embodiment of the invention, the connection areas of the profiles being shown in an enlarged form in the circles; and
- Figure 13 shows the sequence of images of Figures 8 to 12 in superimposition.

### Detailed description

With reference to the appended drawings reference numeral 1 globally denotes a roller shutter box according to the invention.

Here and henceforth in the description and claims, reference will made to the shutter box 1 in conditions of use. The references to an upper or lower position should be understood in such sense.

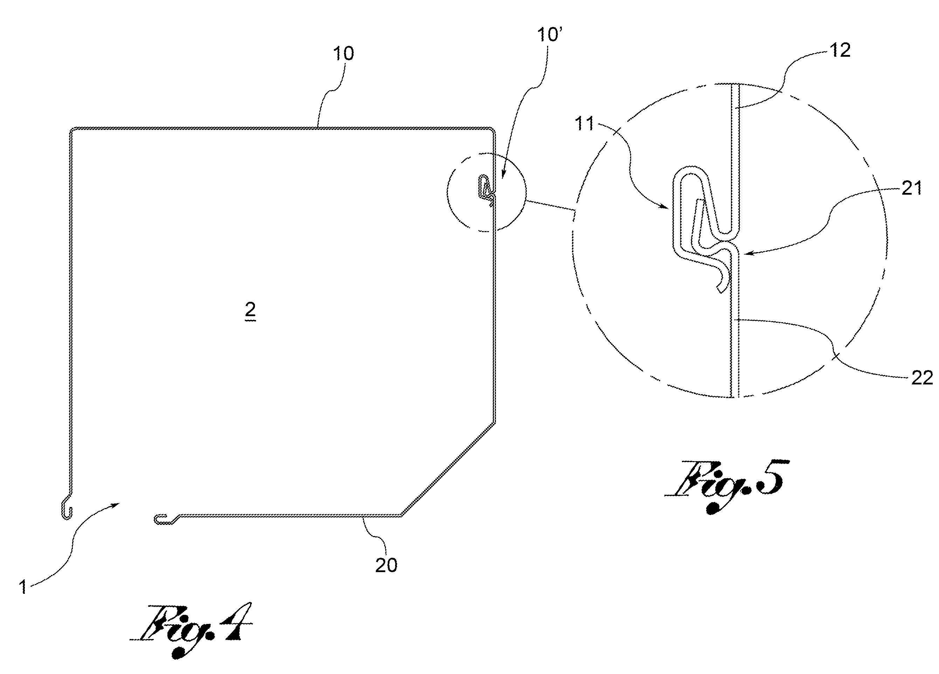

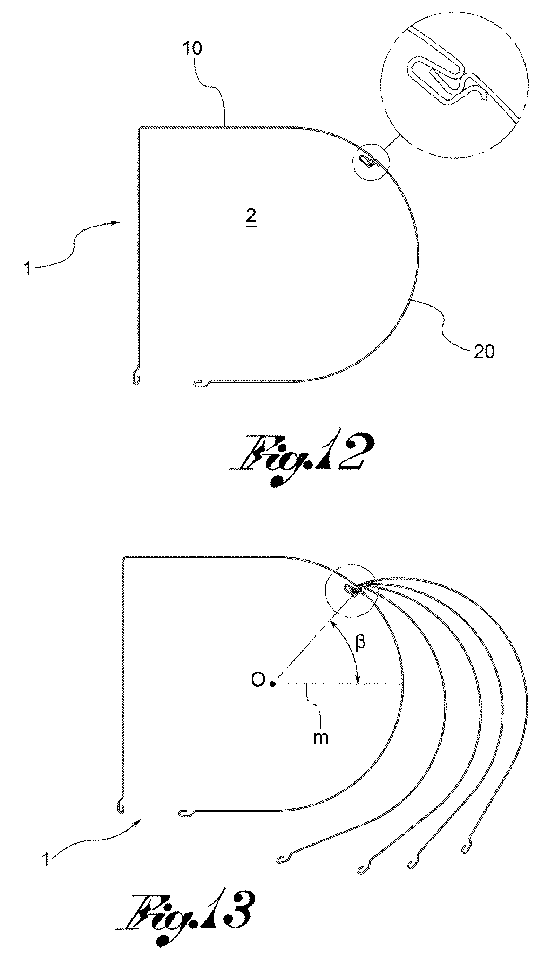

According to a general embodiment of the invention ( shown for example in Figures 4 and 12), the box 1 comprises an upper profile 10 and a lower profile 20, connected to each other to form an inner chamber 2 for housing a shutter (not shown). The upper profile is designed to be attached to the wall or ceiling and may be made in a single piece or in two or more pieces. The lower profile 20 constitutes the visible part of the box 1 and is detachably connected to the upper profile to permit opening of said box. Preferably, the box 1 is closed at its two longitudinal ends by end elements (not shown), associated to the two profiles to support the pin of the shutter. The box 1 may be of any shape, in particular square, semi-square (see Figure 4) and semicircular (see Figure 12).

The lower profile 20 is connected to the upper profile 10 by means of an extremal coupling portion 21 which engages a housing seat 11 made in an extremal portion 10' of the upper profile 10.

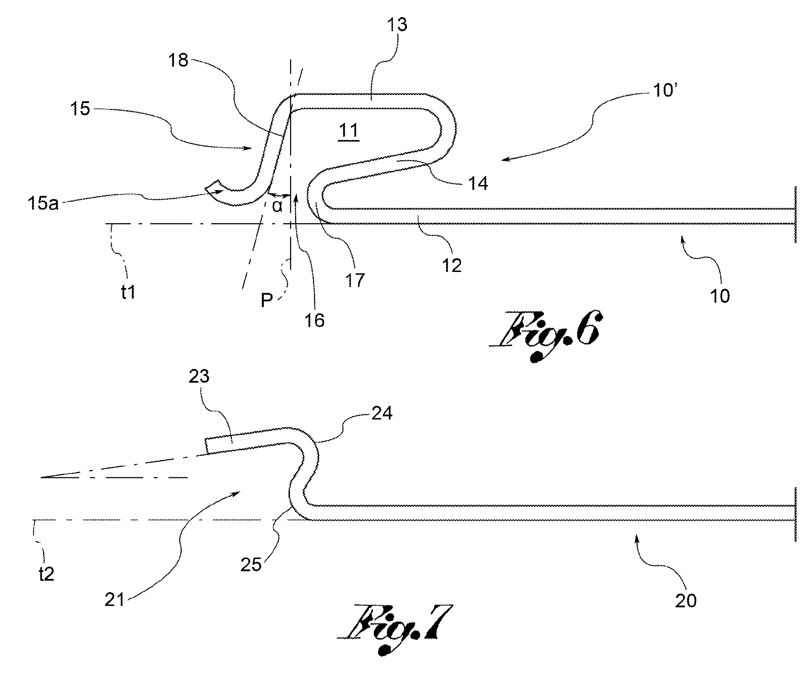

As shown for example in Figure 6, the extremal portion 10' of the upper profile 10 has a substantially Z-shaped cross-section.

More specifically, the Z-shaped cross-section is defined by a first tract 13, which is distanced in relation to the main body 12 of the upper profile 10 on the inner side of the box, and by a second tract 14 which diagonally connects the first tract 13 to the main body 12. The first tract 13 may be parallel or not to the main body 12.

The first tract 13 has an angled end portion 15, bent towards the main body 12, but distanced from it to define an access opening 16 to the housing seat 11. The housing seat 11 is thus delimited by the first tract 13, by the second tract 14 and by the end portion 15.

As shown in particular in Figure 6, the angled end portion 15 defines a flat surface 18 facing the seat 11 and forms with such surface an acute angle α in relation to the perpendicular p to a plane t1 which is tangent to the main body 12 of the upper profile next to the connection area 17, namely the area in which the main body 12 of the upper profile connects to the second connection tract 14.

The conformation described above of the end portion 15 in relation to the main body 12 facilitates the insertion of the coupling portion 21 in the seat 11. As may be observed from the appended drawings, the flat surface 18 of the end portion 15 is convergent towards the inside of the seat, so as to define an entry guide.

As may be seen by comparing figure 4 and figure 12, the final spatial orientation of the end portion 15 depends on the conformation of the box. In the case of a semi-square box (see figure 4) the housing seat 11 is made in part of the upper profile 10 positioned vertically and the angled end portion 15 thus results to be inclined downwards, with evident advantage in terms of ease of insertion of the coupling portion 21 in the seat 11. In the case of a semi-circular box (see figure 12) the housing, seat 11 can be made in a part of the profile positioned on a curved surface (i.e. on an inclined tangent plane) and the angled end portion 15 may not necessarily be inclined downwards. In any case the conformation of the angled end portion 15 described above constitutes an advantage compared to the solutions of the prior art cited, in which even in the best situation of the upper profile being vertically positioned, the entrance to the housing seat results to be horizontal or even facing upwards. In particular, in the case of a semi-circular box (as shown in figure 13), it is possible to arrange the connection area between the two profiles in the curved area of the box with angles β of over 40° (up to values close to 50°) in relation to a plane m passing through the centre of the curve 0 of the circular area of the box 1.

The coupling portion 21 comprises a tongue 23 engaging the housing seat 11 in a catching relation passing through the access opening 16. The tongue 23 is connected to the main body 22 of the lower profile by a connection tract with a double curve, which in particular defines an S-shaped cross-section.

More specifically, the coupling portion 21 has two humps 24 and 25 of opposed concavity, positioned at the connection tract of the tongue 23 to the main body 22 of the lower profile and corresponding to the aforesaid two curves. One hump 24 is proximal to the tongue 23 and the other hump 25 is distal in relation to said tongue.

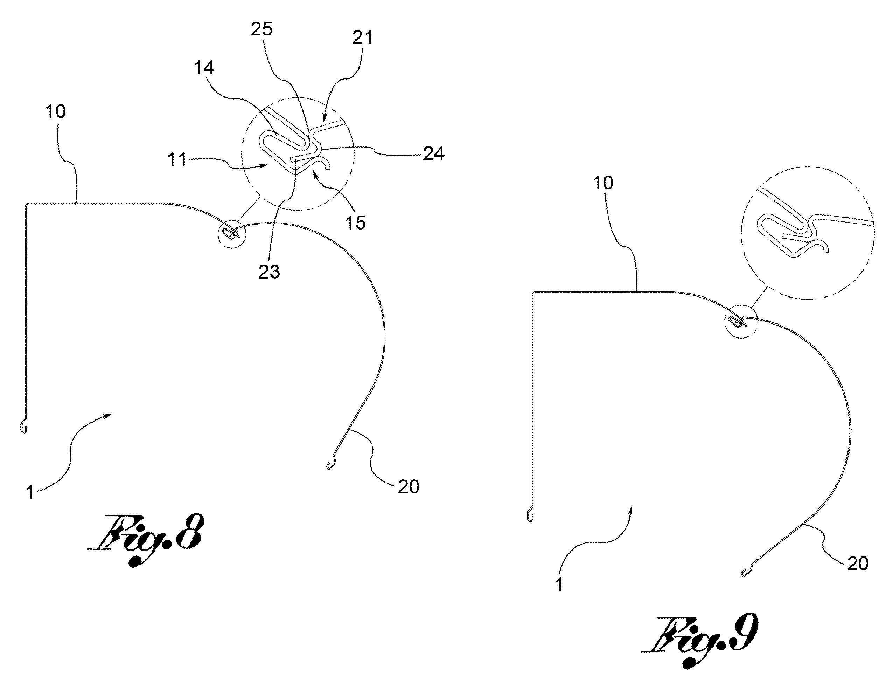

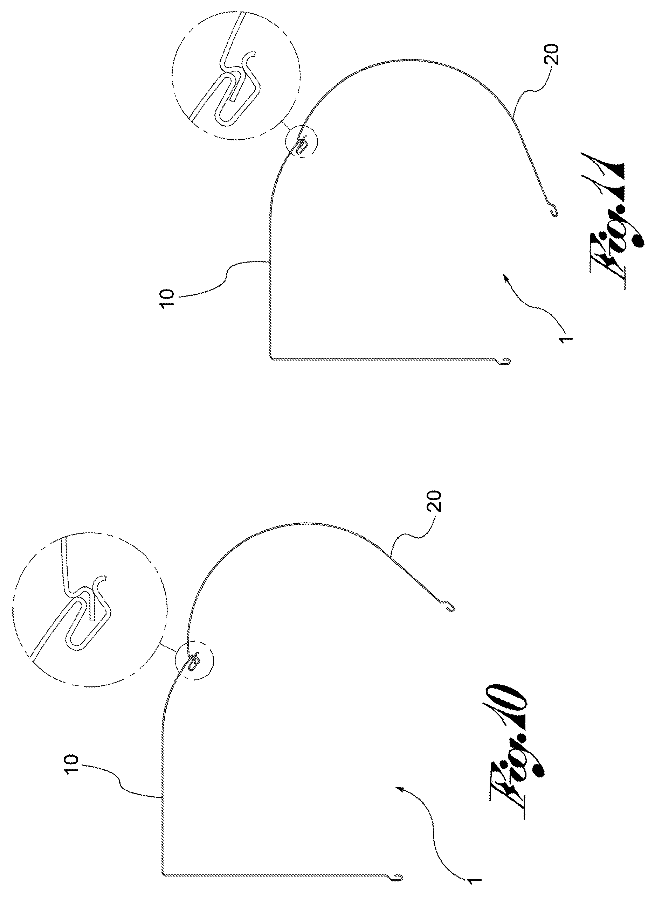

As shown in the sequence of Figures 8 to 12, the coupling portion 21 is sized so that during its insertion inside the seat 11 the proximal hump 24 touches the angled end portion 15 next to or at the flat surface 18, while the distal hump 25 touches the main body 12 of the upper profile in the connection area 17. The flat surface 18 is inclined toward the inside of the seat 11 and thus guides toward the inside of the seat 11 the coupling portion 21, pushing it towards the main body 12 of the upper profile 10. The presence of the two humps 24 and 25 of opposed concavity accentuates the guide effect and at the same time ensures that there is contact between the lower profile and upper profile on the external side of the box 1, thus satisfying the aforementioned aesthetic requirements. An advantageous synergic effect between the conformation of the angled end portion 15 and the two hump conformation of the coupling portion 21 thus ensues.

The effect of drawing the lower profile 20 closer towards the upper profile 10 is accentuated by the elasticity of the end portion 15 which, if forced downwards elastically generates an opposite upward thrust, with the effect of returning the coupling portion 21 to an upward position.

Preferably, as shown in the appended drawings, the connection area 17 between the main body 12 of the upper profile and the second connection tract 14 is bevelled or rounded to determine a smooth sliding of the distal hump 25. In particular, the connection area 17 has a curvilinear shape.

Advantageously, to facilitate the sliding of the coupling portion 21 inside the seat 11; each hump 24 or 25 is bevelled or rounded, and preferably has a curvilinear shape.

Advantageously, the angled end portion 15 has an extremity 15a bent towards the outside of the seat. In particular, as shown for example in Figure 6, the extremity 15a is bevelled or rounded, to favour the insertion of the tongue 23 inside the seat. Such extremity 15a may also act as an abutment surface for the main body 22 of the lower profile 20. According to an embodiment solution not shown in the appended drawings, the abutment surface defined by the extremity 15a may, in particular, be flat with preferably bevelled or rounded corners.

Preferably, the tongue 23 of the coupling portion 21 is inclined towards a plane t2 tangent to the main body 22 next to the connection area with the tongue 23, in such a way that with the coupling portion 21 fully inserted in the seat 11 the tongue 23 is facing against the second connection tract 14 of the housing seat 11. Preferably, as shown in particular in Figures 4 and 12, the tongue 23 is sized to engage the aforesaid second tract 14, so as to guarantee coupling stability of the coupling portion 21 in the housing seat 11.

The invention thus permits several advantages to be achieved, some of which already described.

The roller shutter box 1 according to the invention offers easy coupling of the lower profile while at the same time proving satisfactory from an aesthetic point of view without the need to make housing seats counter-shaped to the coupling portion. On the contrary, such effect is achieved by widening the entrance of the housing seat.

The roller shutter box 1 according to the invention makes it possible to position the joining area of the two profiles very close to the top of said box in the case in which the shutter box has a semicircular shape.

The roller shutter box is lastly easy and economical to produce, given that the profiles 10 and 20 may be made by forming or pressing.

The invention thus conceived thereby achieves the intended purposes.

Obviously, its practical embodiments may assume forms and configurations different from those illustrated above while remaining within the scope of protection of the invention.

In addition, all the parts may be replaced with technically equivalent elements and the dimensions, shapes and material used may be varied as needed.

## Claims

1. Roller shutter box comprising an upper profile (10) and a lower profile (20), detachably connected to the upper profile by means of an extremal coupling portion (21) which engages a housing seat (11) made at an extremal portion (10') of the upper profile, the latter portion having a substantially Z-shaped cross-section, defined by a first tract (13), which is distanced in relation to the main body (12) of the upper profile (10) on the inner side of the box, and by a second tract (14) which diagonally connects the first tract (13) to the main body (12), the first tract (13) having an angled end portion (15), bent towards the main body (12), but distanced from it to define an access opening (16) of the housing seat (11), which is delimited by the first tract (13), by the second tract (14) and by the end portion (15), the coupling portion (21) comprising a tongue (23) connected to the main body (22) of the lower profile with a double curve, the tongue (23) engaging the housing seat (11) in catching relation passing through the access opening (16), wherein the angled end portion (15) defines a flat surface (18) facing the seat (11) wherein in the connection tract of the tongue (23) to the main body (22) of the lower profile, the coupling portion (21) has two humps (24, 25) of opposed concavity, the coupling portion (21) being sized so that during its insertion in the seat (11) the hump (24) proximal to the tongue (23) touches the angled end portion (15), **characterized in that** the flat surface (18) forms an acute angle in relation to the perpendicular to a plane (t1) which is tangent to the main body (12) of the upper profile next to area (17) with the second connection tract (14), and wherein the distal hump (25) touches the main body (12) of the upper profile in the connection area (17) with the second connection tract (14).

2. Box according to claim 1, wherein the connection area (17) between the main body (12) of the upper profile and the second connection tract (14) is bevelled or rounded, and preferably has a curvilinear shape.

3. Box according to claim 1 or 2, wherein each hump (24, 25) of the coupling portion (21) is bevelled or rounded and preferably has a curvilinear shape.

4. Box according to one or more of the previous claims, wherein the angled end portion (15) has an extremity (15a) bent towards the outside of the seat.

5. Box according to claim 4, wherein the extremity (15a) of the angled end portion (15) is bevelled or rounded.

6. Box according to claim 4 or 5, wherein the extremity (15a) of the angled end portion (15) defines an abutment surface for the main body (22) of the lower profile (20).

7. Box according to one or more of the previous claims, wherein the tongue (23) of the coupling portion (21) is inclined towards a plane (t2) tangent to the main body (22) next to the connection area with the tongue (23), in such a way that with the coupling portion (21) fully inserted in the seat (11) the tongue (23) is facing against the second connection tract (14) of the housing seat (11).

## Patentansprüche

1. Rolladenkasten, umfassend ein oberes Profil (10) und ein unteres Profil (20), welches mit dem oberen Profil mittels eines extremalen Kopplungsabschnitts (21) lösbar verbunden ist, welcher mit einem Gehäusesitz (11) eingreift, welcher an einem extremalen Abschnitt (10') des oberen Profils ausgebildet ist, wobei der letztere Abschnitt einen im Wesentlichen Z-förmigen Querschnitt aufweist, welcher durch einen ersten Teil (13), welcher in Bezug auf den Hauptkörper (12) des oberen Profils (10) an der Innenseite des Kastens beabstandet ist, und durch einen zweiten Teil (14), welcher den ersten Teil (13) mit dem Hauptkörper (12) diagonal verbindet, definiert ist, wobei der erste Teil (13) einen gewinkelten Endabschnitt (15) aufweist, welcher in Richtung des Hauptkörpers (12) gebogen ist, aber von ihm beabstandet ist, um eine Zugangsöffnung (16) des Gehäusesitzes (11) zu definieren, welcher durch den ersten Teil (13), durch den zweiten Teil (14) und durch den Endabschnitt (15) begrenzt ist, wobei der Kopplungsabschnitt (21) eine Zunge (23) umfasst, welche mit dem Hauptkörper (22) des unteren Profils in einer Doppelkurve verbunden ist, wobei die Zunge (23) mit dem Gehäusesitz (11) in einer eingreifenden Weise durch die Zugangsöffnung (16) tretend eingreift, wobei der gewinkelte Endabschnitt (15) eine flache Fläche (18) definiert, welche zu dem Sitz (11) weist, wobei in dem Verbindungsteil der Zunge (23) mit dem Hauptkörper (22) des unteren Profils der Kopplungsabschnitt (21) zwei Aufwölbungen (24, 25) von entgegengesetzter Konkavität aufweist, wobei der Kopplungsabschnitt (21) so bemessen ist, dass während dessen Einsetzens in den Sitz (11) die Aufwölbung (24) proximal zu der Zunge (23) den gewinkelten Endabschnitt (15) berührt, **dadurch gekennzeichnet, dass** die flache Fläche (18) einen spitzen Winkel in Bezug auf die Normale zu einer Ebene (t1) bildet, welche zu dem Hauptkörper (12) des oberen Profils nahe einem Bereich (17) mit dem zweiten Verbindungsteil (14) tangential ist, und wobei die distale Aufwölbung (25) den Hauptkörper (12) des oberen Profils in dem Verbindungsbereich (17) mit dem zweiten Verbindungsteil (14) berührt.

2. Kasten nach Anspruch 1, wobei der Verbindungsbereich (17) zwischen dem Hauptkörper (12) des oberen Profils und dem zweiten Verbindungsteil (14) abgeschrägt oder abgerundet ist und vorzugsweise eine gekrümmte Form aufweist.

3. Kasten nach Anspruch 1 oder 2, wobei jede Aufwölbung (24, 25) des Kopplungsabschnitts (21) abgeschrägt oder abgerundet ist und vorzugsweise eine gekrümmte Form aufweist.

4. Kasten nach einem oder mehreren der vorhergehenden Ansprüche, wobei der gewinkelte Endabschnitt (15) eine Extremität (15a) aufweist, welche in Richtung der Außenseite des Sitzes gebogen ist.

5. Kasten nach Anspruch 4, wobei die Extremität (15a) des gewinkelten Endabschnitts (15) abgeschrägt oder abgerundet ist.

6. Kasten nach Anspruch 4 oder 5, wobei die Extremität (15a) des gewinkelten Endabschnitts (15) eine Anlagefläche für den Hauptkörper (22) des unteren Profils (20) definiert.

7. Kasten nach einem oder mehreren der vorhergehenden Ansprüche, wobei die Zunge (23) des Kopplungsabschnitts (21) in Richtung einer Ebene (t2) tangential zu dem Hauptkörper (22) nahe dem Verbindungsbereich mit der Zunge (23) derart geneigt ist, dass bei vollständig eingesetztem Kopplungsabschnitt (21) in den Sitz (11) die Zunge (23) gegen den zweiten Verbindungsteil (14) des Gehäusesitzes (11) weist.

## Revendications

1. Caisson de volet roulant comprenant un profilé supérieur (10) et un profilé inférieur (20), relié de manière amovible au profilé supérieur au moyen d'une partie de couplage extrême (21) qui vient en prise avec un siège de logement (11) réalisé dans une partie extrême (10') du profilé supérieur, cette dernière partie ayant une section transversale sensiblement en forme de Z, définie par un premier segment (13), qui se trouve à distance du corps principal (12) du profilé supérieur (10) du côté interne du caisson, et par un second segment (14) qui relie en diagonale le premier segment (13) au corps principal (12), le premier segment (13) comportant une partie terminale inclinée (15), pliée vers le corps principal (12) mais située à distance de celui-ci pour définir une ouverture d'accès (16) du siège de logement (11), qui est délimitée par le premier segment (13), par le second segment (14) et par la partie terminale (15), la partie de couplage (21) comprenant une languette (23) reliée au corps principal (22) du profilé inférieur par une double courbe, la languette (23) venant en prise avec le siège de logement (11) par accrochage en passant à travers l'ouverture d'accès (16), dans lequel la partie terminale inclinée (15) définit une surface plane (18) faisant face au siège (11), dans lequel dans le segment de liaison de la languette (23) au corps principal (22) du profilé inférieur, la partie de couplage (21) présente deux bossages (24, 25) de concavité opposée, la partie de couplage (21) étant dimensionnée de telle sorte que lors de son introduction dans le siège (11), le bossage (24) situé à proximité de la languette (23) touche la partie terminale inclinée (15), **caractérisé en ce que** la surface plane (18) forme un angle aigu par rapport à la perpendiculaire à un plan (t1) qui est tangent au corps principal (12) du profilé supérieur à proximité d'une zone (17) avec le second segment de liaison (14), et dans lequel le bossage distal (25) touche le corps principal (12) du profilé supérieur dans la zone de liaison (17) avec le second segment de liaison (14).

2. Caisson selon la revendication 1, dans lequel la zone de liaison (17) entre le corps principal (12) du profilé supérieur et le second segment de liaison (14) est biseautée ou arrondie, et présente de préférence une forme curviligne.

3. Caisson selon la revendication 1 ou 2, dans lequel chaque bossage (24, 25) de la partie de couplage (21) est biseautée ou arrondie et présente de préférence une forme curviligne.

4. Caisson selon une ou plusieurs des revendications précédentes, dans lequel la partie terminale inclinée (15) a une extrémité (15a) pliée vers l'extérieur du siège.

5. Caisson selon la revendication 4, dans lequel l'extrémité (15a) de la partie terminale inclinée (15) est biseautée ou arrondie.

6. Caisson selon les revendications 4 ou 5, dans lequel l'extrémité (15a) de la partie terminale inclinée (15) définit une surface de butée pour le corps principal (22) du profilé inférieur (20).

7. Caisson selon une ou plusieurs des revendications précédentes, dans lequel la languette (23) de la partie de couplage (21) est inclinée vers un plan (t2) tangent au corps principal (22) à proximité de la zone de liaison avec la languette (23), d'une manière telle que lorsque la partie de couplage (21) est introduite à fond dans le siège (11), la languette (23) fait face contre le second segment de liaison (14) du siège de logement (11).
